# FASCICULE DE BREVET EUROPEEN

(11) **EP 1 027 965 B1**
(45) Date de publication et mention de la délivrance du brevet: **01.10.2003**
(21) Numéro de dépôt: 00500020.3
(22) Date de dépôt: 11.02.2000
(51) Int. Cl.: B25J 17/02

(54) **Manipulateur parallèle muni d'un méchanisme de guidage passif**
Parallelmanipulator mit einem passiven Führungsmechanismus
Parallel manipulator with a passive guiding mechanism

(30) Priorité: 11.02.1999 ES 9900283
(43) Date de publication de la demande: 16.08.2000
(73) Titulaire: FUNDACION FATRONIK, 20870 Elgoibar (Gipuzkoa) (ES)
(72) Inventeur: Saenz Fernadez, Agustin J., 20870 Elgoibar (Gipuzkoa) (ES); Collado Jimenez, Valentin, 20870 Elgoibar (Gipuzkoa) (ES)
(74) Mandataire: Urizar Barandiaran, Miguel Angel

(56) Documents cités:
- EP-A- 0 674 969
- DE-C- 19 836 624

## Description

La machine en question consiste en un module à mouvements synchrones en parallèle, de sorte qu'ils génèrent, combinés entre eux, les trois axes coordonnés sur l'outil ou la griffe, son application préférentielle étant axée sur des machines-tranferts, des centres d'usinage, des modules agiles et/ou des applications de manipulation de composants.

La présente invention est conçue comme la prochaine génération de machines et qui, appliquée à différentes dispositions ou utilités, peut faciliter l'adaptation de certaines entreprises fabricantes de machines à la demande de secteurs aussi exigeants que celui de l'automobile ou maintenir ainsi ou améliorer la capacité compétitive sur ce marché qui, au cours des dernières années, consomme, directement ou indirectement, plus de 50% de la production de machines-outils.

Les exigences actuelles de ce type de marchés poussent les fabricants de machines à adopter des solutions constructives de plus en plus créatives et différentes des machines conventionnelles, car ces dernières se trouvent au stade d'optimisation limite pour la plupart de leurs paramètres fondamentaux de conception.

Dans ce sens, les solutions de la cinématique parallèle, autrement dit des machines qui possèdent des actionnements fonctionnant simultanément au lieu d'être désaccouplés, permettent un saut qualitatif pour bien des problèmes existants.

L'une des premières applications de machines à architecture non cartésienne est fondée sur la cinématique parallèle de la plate-forme de Steward pour la fabrication de simulateurs aériens (fin des années 60).

Dans le cas de cette machine, la poupée est montée sur une plate-forme qui prend appui sur six axes télescopiques. Les axes sont directement reliés à la table fixe. La longueur des axes télescopiques détermine la position de la poupée, qui se déplace avec une liberté de 6° (3 translations et 3 rotations) où l'angle maximum permis est limité à 30°.

La conséquence en est que les axes cartésiens n'apparaissent pas comme tels et il n'existe qu'une forme virtuelle dans le système de contrôle.

La principale différence avec les mécanismes cartésiens repose sur le fait qu'il n'y a pas qu'une chaîne cinématique qui transmette toutes les forces, mais que dans le cas de six axes, ceux-ci forment six chaînes cinématiques "parallèles" où se distribuent les forces.

Chaque axe y définit un degré de liberté et ne transmet que des forces purement de traction ou de compression de la position de l'axe.

Dans les mécanismes parallèles, aucun axe n'en "entraîne" un autre. Et c'est pourquoi la masse à déplacer est considérablement inférieure à celle des machines conventionnelles. Les forces sont distribuées à tous les axes. Les mécanismes parallèles ayant des masses à déplacer très petites peuvent donc avoir une fabrication très rigide. La combinaison de petites masses à déplacer et ayant une grande rigidité fait que les mécanismes parallèles soient très intéressants dans l'usinage à grande vitesse.

Cependant, il est difficile de concevoir des axes télescopiques ayant une rigidité suffisante. En outre, la zone de travail de l'hexapode est toujours symétrique en rotation et ne peut être conçu arbitrairement. De surcroît, les hexapodes se trouvent dans les prototypes relativements grands.

À l'heure actuelle, on essaie de développer des solutions dont la cinématique a les avantages des structures parallèles mais qui en évitent certains inconvénients. Axes montés sur coulisses qui se déplacent sur des guides parallèles, moteurs linéaires qui servent d'actionnements.

Le document EP 0 674 969 A décrit un module qui comprend une structure fixe et passive. Toutefois, la structure passive ("constraining device 340") n'est pas composée d'une paire de ciseaux cinématiques. De plus, les raccordements des bras ("struts 316") ont toujours trois degrés de liberté.

Le demandeur a mis au point un module à mouvement cinématique parallèle qui présente les caractéristiques et les avantages suivants par rapport à ce qui est connu.

La présente invention se compose de plusieurs éléments structuraux, tels que décrits par les caractéristiques de la revendication 1.

La structure passive, sans actionnements, qui supporte les mouvements dans un plan se base sur une ou plusieurs paires de ciseaux cinématiques articulés sur, au moins, une arête. Cette structure mobile a pour fonction l'absorption des efforts sur les trois axes cartésiens et les trois moments.

À cette structure passive, se joignent, d'une part, une structure fixe qui sert de support à toute la machine et, de l'autre, une structure mobile qui porte la poupée au moyen des guidages pertinents.

D'un autre côté, il existe des "bras" qui s'unissent, d'une part, à la structure fixe et, de l'autre, à la structure mobile qui porte la poupée ou la griffe au moyen de joints de cardan ou de joints à rotule sphérique. Ces bras actifs sont ceux qui sont installés sur les actionnements.

La distribution dans l'espace des points d'amarrage à la structure fixe, à la mobile et aux bras doit être calculée en focntion de la rigidité, la vitesse et l'accélération dont on veut doter l'outil.

La présente invention présente une série d'avantages très importants, aussi bien du point de vue structural que du point de vue cinématique et dynamique.
- La configuration décrite ci-dessus présente des rigidités minimales en tous points de son volume de travail trois fois supérieures à celles de n'importe quelle machine conventionnelle. Ceci est dû à la combinaison d'une bonne position des éléments structuraux mobiles dans l'espace joints aux éléments passifs.
- Le volume de travail de la machine en mm³ est plus de deux fois supérieur à celui d'une machine ayant le même cubage de travail.
- Le ratio du volume de machine occupé par rapport au cubage de travail qui peut être atteint par l'outil ou la griffe est analogue à celui de la plus exigeante des machines à actionnements en série et très supérieur à celui des machines existantes à actionnements en parallèle.
- Du point de vue de son utilisation dans des secteurs où la largeur de la machine est essentielle, étant donné que les lignes de fabrication sont configurées et donc que la distance minimale de transfert entre modules est critique, on peut affirmer que la présente invention optimise la cote de largeur par rapport au cours demandé dans cette dimension, car, pour des cotes de machines de 1, nous obtenons des cours possibles de 0,8.
- Dans la configuration la plus simple de l'invention, le nombre d'actionnements utilisés est égal à celui des axes contrôlés du mouvement. En ce qui concerne cet aspect, elle est clairement meilleure que les solutions traditionnelles de cinématique parallèle avec six bras et cinq axes.
- La combinaison des éléments structuraux actifs du type "barre" jointe aux structures passives articulées, permettent de supporter des moments de flexion bien plus élevés que le reste des solutions où l'on ne dispose que de trois structures du type "barre".
- Le poids que doivent déplacer les actionnements est notablement inférieur à celui d'une machine conventionnelle ayant des mouvements à cours similaires.
- Le nombre des composants qui constituent cette machine est notablement inférieur à celui d'une machine conventionnelle, c'est pourquoi aussi bien le coût final que le montage en sont sensiblement moins chers.
- Comme il n'existe pas d'éléments structuraux tels que chariots et pièces intermédiaires, les usinages nécessaires et donc leur coût sont considérablement réduits.
- La distribution du volume de travail possible pour la machine permet de circonscrire un cubage orthogonal de travail, mais laisse des "extra-cours" libres qui peuvent être utilisés pour mener des activités collatérales telles que des changements d'outil, la vérification d'outil, etc. sans qu'il soit nmécessaire d'envahir la zone de la pièce.
- La variante la plus complexe de la machine, comportant un actionnement supplémentaire, permet de contrôler la rotation relative de la structure qui étreint le support de la poupée autour de l'axe Z. De la sorte, on peut obtenir des positions ayant uneplus grande rigidité.
- La disposition de la machine dans l'espace para rapport à la structure fixe peut varier sans affecter, en aucune façon, le comportement de l'invention. Cependant, ceci peut permettre au client de choisir aléatoirement de plus grands cours sur l'un des axes sans coût additionnel pour le fabricant.

Pour mieux comprendre l'objet de la présente invention, une forme préférentielle de réalisation pratique est représentée dans les plans, susceptible de changements accessoires qui n'en dénaturent pas le fondement.

La figure 1 est une représentation schématique et en perspective d'une réalisation pratique avec trois bras actifs du module objet de l'invention.

La figure 2 est une représentation schématique et en perspective d'une réalisation pratique avec trois bras actifs du module objet de l'invention, plus un actionnement supplémentaire.

Il y a ci-dessous un exemple de réalisation pratique, non limitative, de la présente invention.

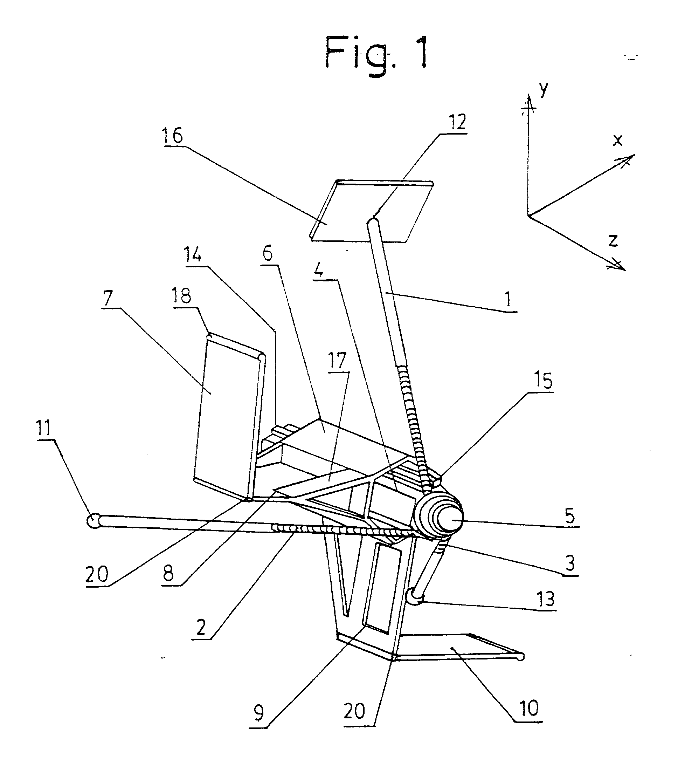

On dispose des bras actifs (trois sur la figure 1) (1, 2, 3) qui sont dans cette réalisation des broches qui ont été dotées de mouvement par un système conventionnel tel qu'un moteur, un moto-réducteur, des poulies ou tout autre moyen de transmission.

Les bras (1), (2), (3) sont unis, par une extrémité, à la structure fixe ou bâti (16) au moyen de joints (11), (12), (13) avec deux degrés de liberté, tels que les joints universels ou de cardan, et, par l'autre extrémité, ils sont unis à une structure mobile spatiale (4) au moyen de joints (15) ayant trois degrés de liberté, tels que les sphériques ou à rotules.

L'invention prévoit que les joints ayant trois degrés de liberté seront ceux de l'extrémité unie au bâti (16) et les joints ayant deux degrés de liberté ceux unis à la structure mobile spatiale (4).

La structure mobile spatiale (4) porte la poupée ou la griffe (5) qui se déplace suivant des mouvements orthogonaux sur les trois axes coordonnés dans l'espace, étant entraînée par le mouvement des bras (1), (2), (3).

L'assemblage de la structure mobile spatiale (4) avec la structure mobile plane (6) est réalisée au moyen de guidages linéaires (14) qui permettent un mouvement par rapport à Z. La structure mobile plane (6) est unie, à son tour, à la structure fixe ou bâti au moyen d'une structure passive, sans actionnements, constituée par une ou plusieurs paires de ciseaux cinématiques (7-8, 9-10) avec l'articulation (20) correspondante.

Ces ciseaux présentent, à une extrémité, un raccord (18) uni au bâti (16) et, à l'autre extrémité, un raccord (17) uni à la structure mobile plane (6)

Ces raccords (17), (18) doivent être articulés, sauf dans l'une des paires de ciseaux, où l'un de ces raccords (17), (18) doit être fixe. Sur la figure 1, l'une des extrémités (17) des ciseaux (7,8) est encastrée dans la structure mobile plane (6).

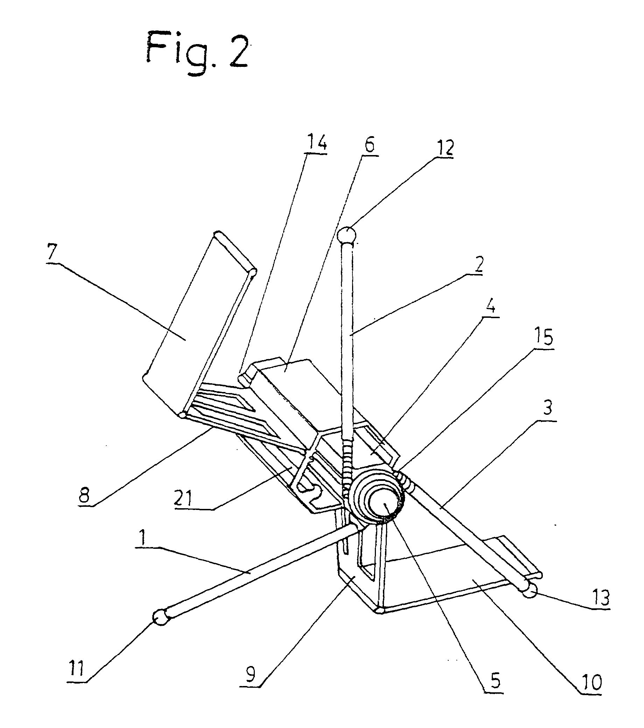

Sur la figure 2, on présente une variante ayant un actionnement supplémentaire (21), qui est à l'origine du déplacement suivant l'axe Z de la structure mobile spatiale (4) par rapport à la structure mobile plane (6). Dans ce cas, tout ce qui a été dit ci-dessus pour un module à trois bras est valable, sauf en ce qui concerne les ciseaux qui doivent comporter des raccords articulés aux deux extrémités, la rotation autour de l'axe Z de la poupée (5) étant par conséquent contrôlée.

En ce qui concerne les actionnements, la présente invention ne présente aucune limitation et a été oconçue avec la possibilité d'inclure aussi bien des actionnements directs à partir du moteur qu'avec des réductions possibles et/ou des accroissements de révolutions. Dans les deux cas, les bras actifs sont actionnés.

Lune des principales améliorations différenciatrices de cette nouvelle solution, comme cela a déjà été commenté auparavant, est la prestation offerte en ce qui concerne les vitesses et accélérations qu'il est possible d'obtenir sur l'outil. En tout point de l'espace de travail et dans n'importe quelle direction, on pourra atteindre des vitesses et des accélérations au minimum égales ou, dans la plupart des cas, supérieures à celles données par chacun des bras actionnés.

Le comportement de l'invention, d'un point de vue dynamique des modes et fréquences naturels, est également avantageux, car la rigidité augmente en réduisant la masse par rapport à une machine conventionnelle.

## Revendications

1. Module ayant un mouvement cinématique parallèle à axes orthogonaux, composé de:
a) une structure fixe (16);
b) une structure passive composée d'une paire, au moins, de ciseaux cinématiques (7, 8; 9, 10), raccordée, par une extrémité, à la structure fixe (16) et, par l'autre extrémité, à une structure mobile plane (6), l'un de ces raccords étant articulé;
c) une structure mobile spatiale (4) porteuse de la poupée (5) de travail et qui peut se déplacer linéairement par rapport à la structure mobile plane;
d) des bras (1, 2, 3) raccordés, par une extrémité, à la structure fixe (16) et, par l'autre extrémité, à la structure mobile spatiale (4), l'un des raccords ayant deux degrés de liberté et l'autre trois degrés de liberté;
e) moyens permettant d'actionner le mouvement des bras.

2. Module ayant un mouvement cinématique parallèle à axes orthogonaux, selon la revendication précédente, **se caractérisant par le fait qu'**il dispose de plusieurs ciseaux dont une paire présente un raccord fixe à l'une de ses extrémmités, les deux raccords étant articulés pour le reste des ciseaux.

3. Module ayant un mouvement cinématique parallèle à axes orthogonaux, selon la première revendication, **se caractérisant par le fait qu'**il comporte un actionnement permettant de déplacer linéairement la structure mobile spatiale par rapport à la structure mobile plane et disposant que la/les paire(s) de ciseaux présentent les deux raccords articulés.

4. Module ayant un mouvement cinématique parallèle à axes orthogonaux, selon les revendications précédentes, **se caractérisant par le fait que** les bras sont au nombre de trois.

## Patentansprüche

1. Modul mit kinematischer Bewegung rechtwinklig zueinander angeordneter Achsen, bestehend aus:
a) einer feststehenden Struktur (16);
b) einer passiven Struktur, die zumindest aus einer kinematischen Schere (7, 8, 9, 10) mit einer einseitigen Anbindung an die feststehende Struktur (16) und auf der gegenüberliegenden Seite mit einer Anbindung an eine flache bewegliche Struktur (16) besteht, wobei eine dieser Anbindungen gelenkig ausgelegt ist;
c) einer räumlich beweglichen Struktur (4), die den Arbeitskopf (5) trägt und die sich mit Bezug auf die bewegliche flache Struktur linear bewegen kann;
d) Armen (1, 2, 3) mit einer einseitigen Anbindung an die feststehende Struktur (16) und auf der gegenüberliegenden Seite mit einer Anbindung an die räumlich bewegliche Struktur (4), wobei eine dieser Anbindungen über zwei Freiheitsgrade und die andere über drei Freiheitsgrade verfügt;
e) Vorrichtungen zum Einleite der Bewegungen der Arme.

2. Modul mit einer kinematisch parallelen Bewegungen senkrecht zueinander stehender Achsen nach dem obigen Patentanspruch, **dadurch gekennzeichnet, dass** mehrere kinematische Scheren zur Verfügung stehen, von denen bei einer die Anbindung an einem der Enden fest ist während bei den übrigen Scheren beide Anbindungen gelenkig ausgeführt sind.

3. Modul mit einer kinematisch parallelen Bewegungen senkrecht zueinander stehender Achsen nach dem obigen Patentanspruch, **dadurch gekennzeichnet, dass** eine Betätigung für das lineare Verfahren der räumlich beweglichen Struktur mit Bezug auf die flache bewegliche Struktur vorhanden ist und die Schere(n) an beiden Anbindungen gelenkig ausgelegt sind.

4. Modul mit einer kinematisch parallelen Bewegungen senkrecht zueinander stehender Achsen nach dem obigen Patentanspruch, **dadurch gekennzeichnet, dass** drei Arme vorhanden sind.

## Claims

1. Module with orthogonal shaft parallel kinematic movement, comprising of:
a) a fixed structure (16);
b) a passive structure comprised, at least, of kinematic shears (7, 8, 9, 10), joined on one end to the fixed structure (16), and on the other, to a mobile flat structure (6), one of these connections being articulated;
c) a spatial mobile structure (4) bearing the working headpiece (5), which can move linearly with respect to the mobile flat structure;
d) some arms (1, 2, 3) joined at one end to the fixed structure (16) and at the other end, to a spatial mobile structure (4), one of the connections having two degrees of freedom and the other three degrees of freedom;
e) means to operate the movement of the arms

2. Module with orthogonal shaft parallel kinematic movement, according to previous claim, characterised because it has several kinematic shears where one of them has a fixed connection at one of its ends, both connections being articulated in the rest of the shears.

3. Module with orthogonal shaft parallel kinematic movement, according to first claim, characterised because it has an operating mechanism to linearly move the spatial mobile structure with respect to the mobile flat structure. Both connections of the shears are articulated.

4. Module with orthogonal shaft parallel kinematic movement, according to previous claims, characterised because there are three arms.
